# EUROPEAN PATENT SPECIFICATION

(11) **EP 1 690 378 B1**
(45) Date of publication and mention of the grant of the patent: **06.10.2010**
(21) Application number: 03781076.9
(22) Date of filing: 30.12.2003
(51) Int. Cl.: H04L 12/56

(54) **APPARATUS AND METHOD FOR TRANSMITTING SYNCHRONIZED THE FIVE SENSES WITH A/V DATA**
VORRICHTUNG UND VERFAHREN ZUM SYNCHRONISIERTEN SENDEN DER FÜNF SINNE MIT A/V-DATEN
DISPOSITIF ET PROCEDE DESTINES A TRANSMETTRE ET SYNCHRONISER DES INFORMATIONS MULTISENSORIELLES AVEC DES DONNEES AUDIO/VIDEO

(30) Priority: 12.11.2003 KR 2003079865
(43) Date of publication of application: 16.08.2006
(73) Proprietor: Electronics and Telecommunications Research Institute, Daejeon 305-350 (KR)
(72) Inventor: YUN, Kug-Jin, 305-707 Daejon (KR); AHN, Chung-Hyun, 305-340 Daejon (KR); KANG, Hoon-Jong, 305-345 Daejon (KR); HUR, Nam-Ho, 610-801 Yeolmae Maeul Apt., 880, 305-330 Daejon (KR); CHO, Suk-Hee, 305-345 Daejon (KR); LEE, Soo-In, 302-772 Daejon (KR)
(74) Representative: Powell, Timothy John
(86) International application number: PCT/KR2003/002917
(87) International publication number: WO 2005/048541

(56) References cited:
- WO-A-00/78367
- WO-A-02/053246
- WO-A-03/071686
- JP-A- 2002 077 444
- JP-A- 2002 257 568
- KR-A- 20010 096 868
- KR-A- 20010 111 600
- KR-U- 980 022 757
- US-A- 5 398 070
- US-A1- 2001 008 611
- US-A1- 2003 014 215
- US-B1- 6 628 204

## Description

### Technical Field

The present invention relates to an apparatus and method for synchronizing and transmitting five sensory data and an actual-feeling multimedia data providing system and method; and, more particularly, to a five sensory synchronizing and transmitting apparatus and method which forms packets by describing vibration, odor, and taste expressed in video/audio by using touch, odor and taste data descriptor, synchronizes touch/odor/taste packets with video/audio packets on a frame basis and transmitting the synchronized packets, and an actual-feeling multimedia data providing system and method that can provide an actual-feeling multimedia service by demultiplexing the packets transmitted from the five sensory data synchronizing and transmitting apparatus and transmitting video data, audio data, touch data, odor data and taste data to corresponding devices.

### Background Art

Recent development in digital video/audio technology provides more realistic three-dimensional video and stereophonic sound and, further, an actual-feeling multimedia service applying all of the five senses of a human being stands in the spotlight.

Korean Patent Laid-open Nos. KR-A-20010096868 (which relates to a vibration effect device) and KR-A-20010111600 (which relates to a movie presenting system) disclose the actual-feeling multimedia service technology.

The vibration effect device stores vibration signals expressed in video by using the number of frames of the video or time code in a memory in advance and applies the stored vibration signals to a user whenever scenes of the video is outputted.

The movie presenting system provides a vibration device that provides vibration signals to a user according to the intensity of audio sound outputted from speakers when a movie is shown in a theater and the like.

The conventional technologies do not precisely describe the direction and rotation with respect to motion of a person or an object expressed in the video/audio and only gives the users vibration by using the vibration effect device for a predetermined video/audio play time or by using the vibration device according to the intensity of audio sound.

However, since the conventional technologies do not precisely describe the direction and rotation with respect to motion of a person or an object expressed in the video/audio, there is a problem that the user enjoying the video/audio cannot enjoy the sense of vibration delicately and accurately. Also, since the conventional technologies do not describe odor and taste which are expressed in the video/audio, they fail to provide the users with a realistic actual-feeling multimedia service.

Meanwhile, under development is technology for spraying chemical aromatics to the users enjoying the video/audio by using an odor device and releasing taste forming materials to users by using a taste device whenever scenes (or circumstances) are changed. However, the odor device and the taste device cannot express the exact odor and taste presented in the video/audio and the spray and the chemical aromatics are sprayed and released by arbitrary manipulation of the users. An example of transmission of odor and taste is given by JP-A-2002077444. Also, an actual-feeling multimedia data providing system, which is under development at present, the vibration, odor and taste are not synchronized with the video and sound presented in the video/audio, and they are simply described in a level similar to each scene.

Related prior art is described by WO-A-053246, WO-A-0184837, and US-A-20030014215.

It is, therefore, an object of the present invention to provide a five sensory synchronizing and transmitting apparatus which forms packets by describing vibration, odor, and taste expressed in video/audio by using touch, odor and taste data descriptors, synchronizes touch/odor/taste packets with video/audio packets on a frame basis and transmitting the synchronized packets, and a method thereof.

It is another object of the present invention, there is provided an actual-feeling multimedia data providing system that can provide an actual-feeling multimedia service by demultiplexing the packets transmitted from the five sensory data synchronizing and transmitting apparatus and transmitting video data, audio data, touch data, odor data and taste data to corresponding devices, and a method thereof.

In accordance with one aspect of the present invention, there is provided an apparatus for synchronizing and transmitting five sensory data, which includes: a video/audio data generating unit for generating video/audio data by receiving multimedia data from an external device;
a touch data describing unit for describing vibration expressed in the multimedia data received from the external device based on a predefined touch data descriptor; an odor data describing unit for describing an odor expressed in the multimedia data transmitted from the external device based on a predefined odor data descriptor; a taste data describing unit for describing a taste expressed in the multimedia data transmitted from the external device based on a predefined taste data descriptor; a video/audio packet forming unit for forming video/audio packets out of the video/audio data generated in the video/audio generating unit; a touch/odor/taste packet forming unit for forming and sequentially combining a touch packet, an odor packet, and a taste packet out of the touch, odor and taste data which are described in the touch data describing unit, the odor data describing unit, and the taste data describing unit, respectively; a multiplexing unit for multiplexing the video/audio packets generated in the video/audio packet generating unit with the touch packet, the odor packet and the taste packet formed in the touch/odor/taste packet forming unit to thereby synchronize the video/audio packets with the touch/odor/taste packets; and a transmitting unit for transmitting a multiplexed packet multiplexed in the multiplexing unit.

In accordance with one aspect of the present invention, there is provided a method for synchronizing and transmitting five sensory data, which includes the steps of: a) generating video/audio data by receiving multimedia data from an external device; b) describing vibration, an odor and a taste expressed in the multimedia data transmitted from the external device to generate touch data, odor data and taste data based on predefined touch, odor and taste data descriptors, respectively; c) forming video/audio packets out of the video/audio data; and forming and sequentially combining a touch packet, an odor packet and a taste packet out of the touch data, the odor data and the taste data, respectively; d) performing synchronization by multiplexing the video/audio packets, the touch packet, the odor packet and the taste packet; and e) transmitting a multiplexed packet to a receiving part.

In accordance with one aspect of the present invention, there is provided a system for providing actual-feeling multimedia data, which includes: a video/audio data generating unit for generating video/audio data by receiving multimedia data from an external device; a touch data describing unit for describing vibration expressed in the multimedia data transmitted from the external device based on a predefined touch data descriptor; an odor data describing unit for describing an odor expressed in the multimedia data received from the external device based on a predefined odor data descriptor; a taste data describing unit for describing a taste expressed in the multimedia data received from the external device based on a predefined taste data descriptor; a video/audio packet forming unit for forming video/audio packets out of the video/audio data generated in the video/audio generating unit; a touch/odor/taste packet forming unit for forming and sequentially combining a touch packet, an odor packet, and a taste packet out of the touch, odor and taste data described in the touch data describing unit, the odor data describing unit, and the taste data describing unit, respectively; a multiplexing unit for multiplexing the video/audio packets generated in the video/audio packet generating unit and the touch packet, the odor packet and the taste packet formed in the touch/odor/taste packet forming unit to thereby synchronize the video/audio packets with the touch/odor/taste packets; a transmitting unit for transmitting a multiplexed packet obtained in the multiplexing unit; a receiving unit for receiving the multiplexed packet; a demultiplexing unit for demultiplexing the multiplexed packet received by the receiving unit into the video data, the audio data, the touch data, the odor data and the taste data; a video device for decoding and outputting the video data demultiplexed by the demultiplexing unit; an audio device for decoding and outputting the audio data demultiplexed by the demultiplexing unit; a vibration device for providing vibration to a user by interpreting the touch data demultiplexed by the demultiplexing unit; an odor device for spraying chemical aromatics to a user by interpreting the odor data demultiplexed by the demultiplexing unit; and a taste device for releasing a taste forming material to a user by interpreting the taste data demultiplexed by the demultiplexing unit.

In accordance with one aspect of the present invention, there is provided a method for providing actual-feeling multimedia data in an actual-feeling multimedia data providing system, which includes the steps of: a) generating video/audio data by receiving multimedia data from an external device; b) describing vibration, an odor and a taste expressed in the multimedia data transmitted from the external device to thereby generate touch data, odor data and taste data based on predefined touch, odor and taste data descriptors, respectively; c) forming video/audio packets out of the video/audio data; and forming and sequentially combining a touch packet, an odor packet and a taste packet out of the touch data, the odor data and the taste data, respectively; d) performing synchronization by multiplexing the video/audio packets with the touch packet, the odor packet and the taste packet; e) transmitting a multiplexed packet to a receiving part; f) receiving the multiplexed packet and demultiplexing the multiplexed packet received by the receiving unit into the video data, the audio data, the touch data, the odor data and the taste data; g) decoding and outputting the demultiplexed video data and the demultiplexed audio data; h) providing a user with vibration by interpreting the demultiplexed touch data; i) spraying chemical aromatics to the user by interpreting the demultiplexed odor data; and j) a taste device for releasing taste forming materials to a user by interpreting the demultiplexed taste data.

### Description of Drawings

The above and other objects and features of the present invention will become apparent from the following description of the preferred embodiments given in conjunction with the accompanying drawings, in which:
Fig. 1 is a block diagram illustrating a five sensory data synchronizing and transmitting apparatus and a real-sense multimedia data providing system using the same in accordance with an embodiment of the present invention;
Fig. 2A describes a touch data descriptor in accordance with an embodiment of the present invention;
Fig. 2B is a diagram showing a header of a touch packet in accordance with an embodiment of the present invention;
Fig. 3A is a diagram describing an odor data descriptor in accordance with an embodiment of the present invention;
Fig. 3B is a diagram showing a header of an odor packet in accordance with an embodiment of the present invention;
Fig. 4A is a diagram describing a taste data descriptor in accordance with an embodiment of the present invention;
Fig. 4B is a diagram showing a header of a taste packet in accordance with an embodiment of the present invention; and
Fig. 5 is a flowchart describing a five sensory data synchronizing and transmitting method and a real-sense multimedia data providing system using the same in accordance with an embodiment of the present.

### Best Mode for the Invention

Other objects and aspects of the invention will become apparent from the following description of the embodiments with reference to the accompanying drawings, which is set forth hereinafter.

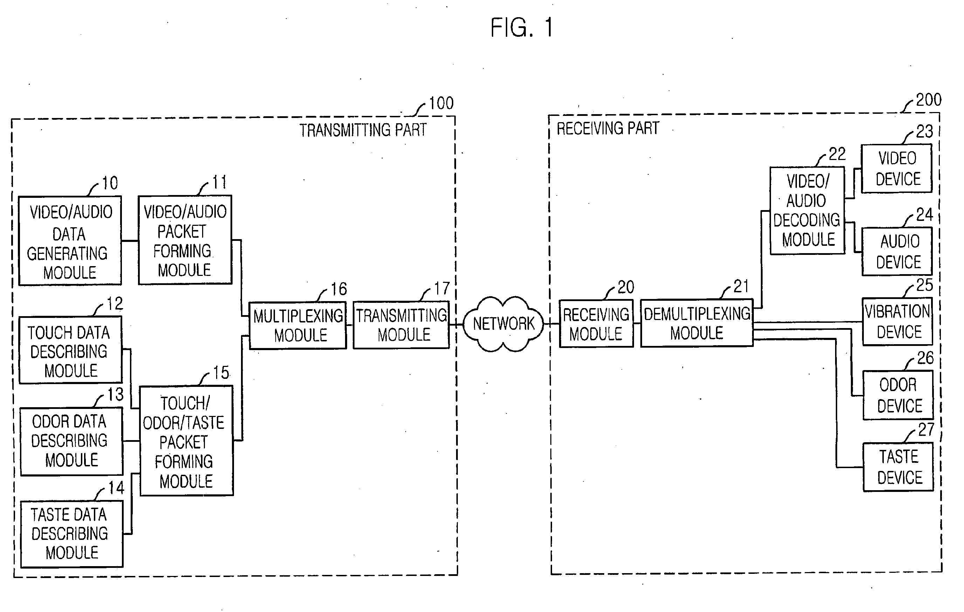

Fig. 1 is a block diagram illustrating a five sensory data synchronizing and transmitting apparatus and a real-sense multimedia data providing system using the same in accordance with an embodiment of the present invention.

As illustrated in Fig. 1, in the real-sense multimedia data providing system of the present invention, the five sensory data synchronizing and transmitting apparatus, which is a transmitting part 100, comprises a video/audio data generating module 10, a video/audio packet forming module 11, a touch data describing module 12, an odor data describing module 13, a taste data describing module 14, a touch/odor/taste packet forming module 15, a multiplexing module 16, and a transmitting module 17. The video/audio data generating module 10 receives multimedia data provided from an external device of a contents provider and generate video/audio data having a compressed stream type by using video encoding method, such as Moving Picture Experts Group 2 (MPEG-2) compressed encoding method. The video/audio packet forming module 11 forms the stream type of video/audio data generated in the video/audio data generating module 10 into packets suitable for a transmission method. The touch data describing module 12 describes vibration expressed in the multimedia data provided form the external device of the content provider by using a pre-defined touch data descriptor. The odor data describing module 13 describes odor expressed in the multimedia data provided form the external device of the content provider by using a pre-defined odor data descriptor. The taste data describing module 14 describes taste expressed in the multimedia data provided form the external device of the content provider by using a pre-defined taste data descriptor. The touch/odor/taste packet forming module 15 forms the touch/odor/taste data described in the touch data describing module 12, odor data describing module 13, and taste data describing module 14 into packets suitable for a transmission method. The multiplexing module 16 multiplexes the video/audio packets formed in the video/audio packet forming module 11 and the touch/odor/taste packets formed in the touch/odor/taste packet forming module 15 based on each frame. The transmitting module 17 transmits the packets multiplexed in the multiplexing module 16 to a receiving part 200.

Meanwhile, the receiving part 200 comprises a receiving module 20, a demultiplexing module 21, a video/audio decoding module 22, a video device 23, an audio device 24, a vibration device 25, an odor device 26, and a taste device 27. The receiving module 20 receives the stream-type packets transmitted from the transmitting part 100. The demultiplexing module 21 depacketizes the packets received in the receiving module 20, demultiplexes the resultant into the video data, audio data, touch data, taste data and odor data, and transmits the data to corresponding processing devices. The video/audio decoding module 22 decodes video data and audio data demultiplexed in the demultiplexing module 21. The video device 23 outputs the video data decoded in the video/audio decoding module 22 onto a screen. The audio device 24 outputs the video data decoded in the video/audio decoding module 22 onto a screen. The vibration device 25 receives touch data demultiplexed in the demultiplexing module 21 and gives vibration to the user to feel movement and rotation. The odor device 26 receives odor data demultiplexed in the demultiplexing module 21, spraying chemical aroma to the user to feel the odor. The taste device 27 receives taste data demultiplexed in the demultiplexing module 21, releasing chemical taste forming materials to the user to feel the taste.

Herein, the real-sense multimedia data providing system of the present invention includes the transmitting part 100 and the receiving part 200.

Hereinafter, structures and operations of the structural elements will be described in detail.

The video/audio packet forming module 11 forms video/audio packets, each of which is formed of a header and payloads, to be suitable for transmitting the video/audio data having a compressed stream type generated in the video/audio data generating module 10 through a communication network. Herein, the header contains a destination address, data for checking continuity when data are lost, data for controlling time synchronization such as time stamp and the payloads contains the video/audio data having the compressed stream type.

The touch data describing module 12 describes vibration expressed in the multimedia data provided from the external device of the content provider by using descriptors describing where touch data are described, whether right/left movement is described, whether up/down movement is described, whether back/forth movement is described, movement distance, movement velocity, movement acceleration, whether right/left rotation is described, right/left rotation angle, right/left rotation speed, and right/left rotation acceleration.

The odor data describing module 13 describes odor expressed in the multimedia data provided from the external device of the contents provider by using descriptors for whether odor data are described, kind of odor, and intensity of odor.

The taste data describing module 14 describes taste expressed in the multimedia data provided from the external device of the contents provider by using descriptors for whether taste data are described, kind of taste, and taste intensity.

For example, when a producer related to a real-sense movie service provided to the receiving part 200 sees a pre-produced movie, the producer describes vibration, odor and taste of a current scene of the movie in the form of touch/odor/taste data by using touch data descriptors, odor descriptors, and taste descriptors to be suitable for the scene, synchronizes the touch/odor/taste data with the video data and audio data, and transmits the synchronized data to the receiving part 200. Also, it is possible that not all touch/odor/taste data can be described for one scene or that the touch/odor/taste data are combined and then described.

The touch/odor/taste packet forming module 15 forms the stream-type touch/odor/taste data, which are described in the touch data describing module 12, odor data describing module 13, and taste data describing module 14 by using corresponding touch/odor/taste descriptors, into packets including a header which are suitable forms to be transmitted to the receiving part 200 through the network. Herein, the header includes descriptor information that describes the touch/odor/taste data. The packets formed in the touch/odor/taste packet forming module 15 includes the touch/odor/taste data sequentially.

The multiplexing module 16 synchronizes the video/audio packet and the touch/odor/taste packet formed in the video/audio packet forming module 11 and the touch/odor/taste packet forming module 15. The multiplexing module 16 performs multiplexing by adding all the video/audio packets into frames that form the multimedia data and adding the touch/odor/taste packets into the last packet. That is, one frame is formed of a plurality of video/audio packets. Among the packets of each frame, the touch/odor/taste packet is added to the last packet. In short, the touch data, the odor data and the taste data are added to the last packet of each frame sequentially.

The demultiplexing module 21 of the receiving part 200 depacketizes the stream-type packet received in the receiving module 20, demultiplexes into video/audio data formed of a payload and a header deprived of network-related header information, e.g., address of the transmitting part 100, and into touch/odor/taste data formed of a header, and transmits the data to corresponding processing devices. Herein, the demultiplexing module 21 examines the headers of the received packets and confirms whether the data of packet is video data, audio data, touch data, odor data, and taste data. In other words, video data and audio data that form one frame are all transmitted to corresponding processing devices and then the touch data, the odor data, and the taste data are transmitted to corresponding processing devices sequentially to thereby synchronize five sensory data, i.e., video data, audio data, touch data, odor data, and taste data and make a user feel vibration, odor and taste expressed in the circumstance of each scene of the multimedia data along with video and sound.

The vibration device 25 is embodied as a vibration chair that can be moved right and left, up and down, and back and forth and/or rotated. The vibration device 25 reads the touch data which is demultiplexed (or separated) in the demultiplexing module 21 and makes a movement or rotation in the right and left, up and down and back and forth. Herein, the starting time and duration of the movement or rotation of the vibration device 25 is determined by being synchronized with the video and sound-outputted from the video device 23 and the audio device 24. That is, as the transmitting part 100 transmits the touch data for video and sound, the vibration device 25 reads the transmitted touch data and makes a movement in the requested direction or makes a rotation. Then, if the transmitting part 100 transmits another touch data for another video and sound, the vibration device 25 reads the new touch data transmitted thereto, stops previous movement and makes a movement in a different direction or makes a rotation.

The odor device 26 is embodied as an aroma spray which is provided with a plurality of chemical aromatics and it can control the intensity of the odor. It analyzes the odor data demultiplexed, or separated, in the demultiplexing module 21 and sprays chemical aromatics having a corresponding intensity. Herein, the starting time and duration of the spraying of a specific chemical aromatic in the odor device 26 are determined after synchronized with video and sound outputted from the video device 23 and the audio device 24. In addition, the odor device 26 can spray one kind of odor by mixing a plurality of chemical aromatics or spray a plurality of prepared aromatics simultaneously to spray diverse aromatics corresponding to the odor data described in the transmitting part 100.

The taste device 27 is embodied in such a method that a plurality of chemical taste forming materials are prepared and a chemical taste forming material of the corresponding taste is released into the mouth of a user through a straw. The taste device 27 analyzes the taste data demultiplexed, or separated, in the demultiplexing module 21 and releases a chemical taste forming material of the corresponding taste. Herein, the starting time and duration of the release of a specific chemical taste forming material in the taste device 27 are determined after synchronized with video and sound outputted from the video device 23 and the audio device 24.

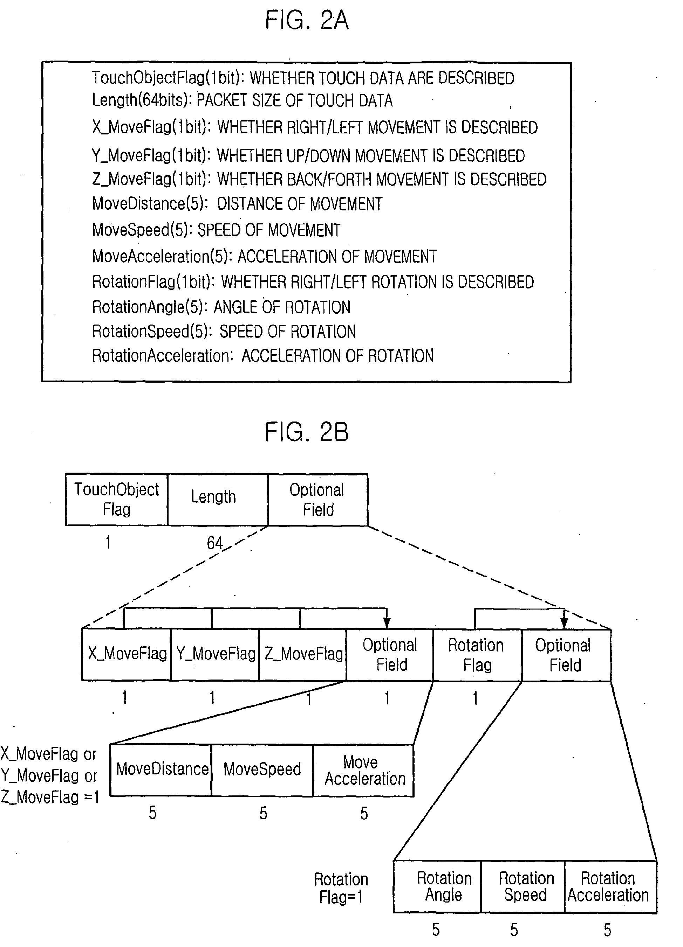

Fig. 2A describes a touch data descriptor in accordance with an embodiment of the present invention, and Fig. 2B is a diagram showing a header of a touch packet in accordance with an embodiment of the present invention.

A touch object flag (TouchObjectFlag) indicates whether or not there is a touch data description. For example, when the touch object flag (TouchObjectFlag) is 1, it means that the touch data are described and, accordingly, the touch data are transmitted from the demultiplexing module 21 of the receiving part 200 to the vibration device 25, thereby activating the vibration device 25.

A length field indicates the size of the touch data packet and the size is 64 bits.

An X_MoveFlag indicates whether or not there is a description on the right/left movement in the touch data. For example, when the X_MoveFlag is 1, the vibration device 25 moves in the right/left.

An Y_MoveFlag indicates whether or not there is a description on the up/down movement in the touch data. For example, when the Y_MoveFlag is 1, the vibration device 25 moves up and down.

A Z_MoveFlag indicates whether or not there is a description on the back/forth movement in the touch data. For example, when the Z_MoveFlag is 1, the vibration device 25 moves back and forth.

Herein, only any one move flag among the X_MoveFlag, Y_MoveFlag and Z_MoveFlag is activated for a predetermined time. Thus, the vibration device 25 moves only in one direction among right/left, up/down and back/forth.

A MoveDistance indicates a distance of movement in any one direction among the right/left, up/down and back/forth in the touch data. In other words, as any one move flag among the X_MoveFlag, Y_MoveFlag and Z_MoveFlag is activated, the MoveDistance indicates a movement distance in a direction corresponding to the MoveFlag. For example, if X_MoveFlag is 1 and the MoveDistance is 10cm, the vibration device moves in the right and left range of 10cm.

A MoveSpeed indicates a speed of movement in one direction among right/left, up/down and back/forth in the touch data. For example, if the X_MoveFlag is 1 and the MoveDistance is 10cm and the MoveSpeed is 5cm/second, the vibration device 25 moves in the right and left range of 10cm for 2 seconds.

The MoveAcceleration indicates an acceleration of movement in any one direction among the right/left, up/down and back/forth. For example, if the X_MoveFlag is 1 and the MoveDistance is 10cm and the MoveSpeed is 5cm/second and the MoveAcceleration is 5cm/second², the vibration device 25 moves in the right and left range of 10cm for 2 seconds and the movement is increased gradually at an acceleration of 5cm/second².

A RotationFlag indicates whether or not there is right/left rotation description. For example, if the RotationFlag is 1, the vibration device 25 is rotated right/left.

A RotationAngle indicates a right/left rotation angle in the touch data.

A RotationSpeed indicates a right/left rotation speed in the touch data.

A RotationAcceleration indicates right/left rotation acceleration in the touch data.

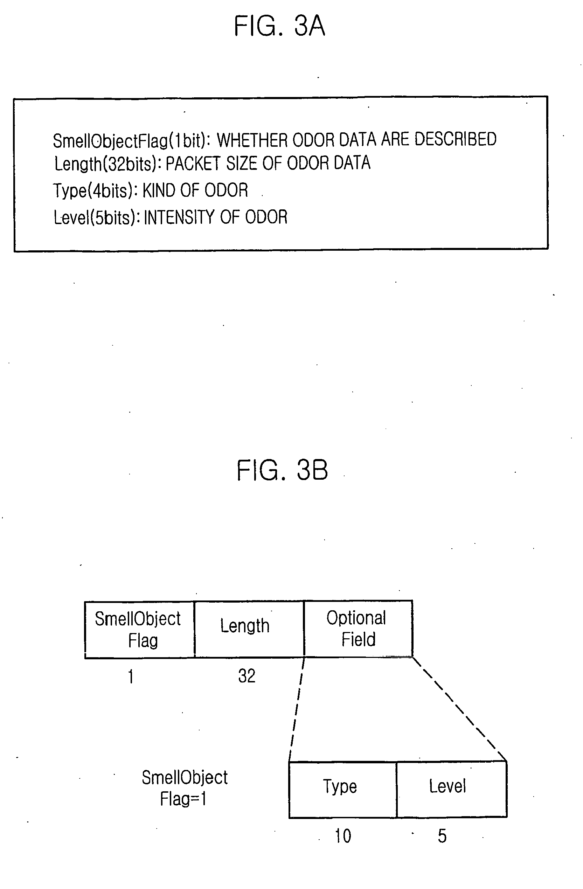

Fig. 3A is a diagram describing an odor data descriptor in accordance with an embodiment of the present invention; and Fig. 3B is a diagram showing a header of an odor packet in accordance with an embodiment of the present invention.

A SmellObjectFlag indicates whether or not there is an odor data description. For example, if the SmellObjectFlag is 1, it means that the odor data are described and, accordingly, the odor data are transmitted from the demultiplexing module 21 of the receiving part 200 to the odor device 26 to thereby activate the odor device 26.

A length field indicates the size of an odor data packet and the size is 32 bits.

A 'Type' means the kind of odor in the odor data. For example, the odor of an aroma is pre-established as '100' and if the SmellObjectFlag is 1 and the type is 100, the odor device 26 sprays a chemical aromatic having the odor of the aroma.

A 'Level' indicates the intensity of the odor in the odor data. For example, if the SmellObjectFlag is 1 and the type is 100 and the level is 31, the odor device 26 sprays a chemical aromatic having the odor of the aroma at the predetermined level of 31. Herein, the higher the level is, the stronger the intensity of the odor is.

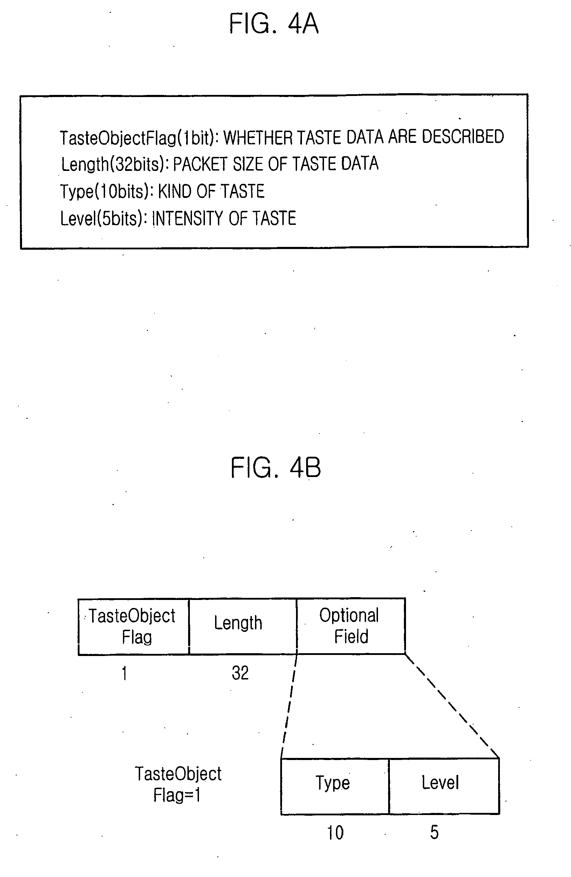

Fig. 4A is a diagram describing a taste data descriptor in accordance with an embodiment of the present invention; and Fig. 4B is a diagram showing a header of a taste packet in accordance with an embodiment of the present invention.

A TasteObjectFlag indicates whether or not there is a taste data description. For example, if the TasteObjectFlag is 1, it means that the taste data are described and, accordingly, the taste data are transmitted from the demultiplexing module 21 of the receiving part 200 to the taste device 27 to thereby activate the taste device 27.

A 'Length' field indicates the size of a taste data packet and the size is 32 bits.

A 'Type' indicates the kind of taste in the taste data. For example, if a hot taste is pre-established as '7' and if the TasteObjectFlag is 1 and the type is 7, the taste device 27 releases a chemical taste forming material that tastes hot.

A 'Level' indicates the intensity of taste in the taste data. For example, if the TasteObjectFlag is 1 and the type is 7 and the Level is 31, the taste device 27 releases a chemical taste forming material that tastes hot with an intensity of the pre-established 31.

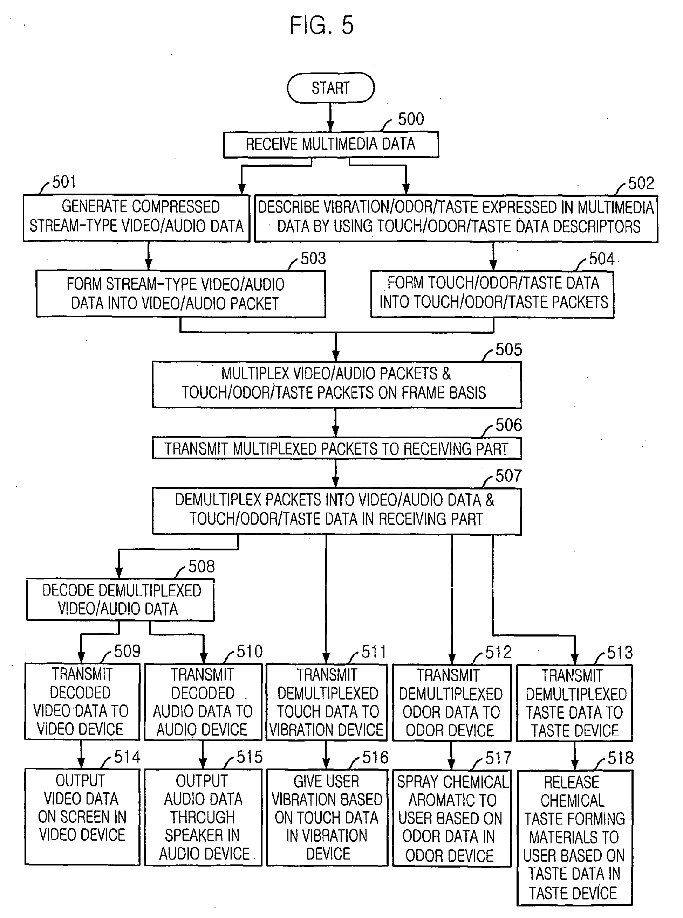

Fig. 5 is a flowchart describing a five sensory data synchronizing and transmitting method and a real-sense multimedia data providing system using the same in accordance with an embodiment of the present.

First, at step 500, multimedia data are inputted from an external device, e.g., a contents provider.

At step 501, video/audio data having a compressed stream type are generated. In other words, when multimedia data are inputted from an external device, e.g., a contents provider, compressed stream-type video/audio data are generated by using an image encoding method, such as Moving Picture Experts Group 2 (MPEG-2) compressed encoding method.

Subsequently, at step 503, the stream-type video/audio data, which are generated in the above, are formed into video/audio packets. That is, the stream-type video/audio data are formed into video/audio packets which are formed of a header including destination address information and a payload including substantial video/audio data, which are proper forms to transmit the stream-type video/audio data to the receiving part 200 through a network.

Meanwhile, at step 502, the vibration/odor/taste expressed in the inputted multimedia data are described by using touch/odor/taste descriptors. That is, vibration expressed in the multimedia data provided from the external device, e.g., a contents provider, is described by using a predefined touch descriptor, and the odor expressed in the multimedia data provided from the external device, e.g., a contents provider, is described by using a predefined odor descriptor, while the taste expressed in the multimedia data provided from the external device, e.g., a contents provider, is described by using a predefined taste descriptor.

Subsequently, at step 504, the touch/odor/taste data are formed into touch/odor/taste packets. That is, touch/odor/taste packets having a header including touch/odor/taste data descriptor information sequentially are formed so that the above described touch data, odor data and taste data can be transmitted to the receiving part 200 through the network properly.

Subsequently, at step 505, the audio/video packet and the touch/odor/taste packets are multiplexed on a frame bass. Herein, the multiplexing module 16 synchronizes the audio/video packets and the touch/odor/taste packets which are restructured in the audio/video packet forming module 11 and the touch/odor/taste forming module 15, respectively. That is, the multiplexing module 16 sequentially performs the multiplexing by adding a plurality of audio/video packets to frames that forms the multimedia data and, lastly, adding the touch/odor/taste packets in order.

At step 506, the multiplexed packets are transmitted to the receiving part 200. At step 507, the packets are received and demultiplexed into video/audio data and touch/odor/taste data in the receiving part 200. That is, the demultiplexing module 21 of the receiving part 200 depacketizes the stream-type packets received in the receiving module 20 and finds out whether the packets are of video data, audio data, touch data, odor data and taste data by checking the headers of the received packets.

At step 508, the demultiplexed video/audio data are decoded in the receiving part 200.

Subsequently, at step 509, video data decoded in the receiving part 200 are transmitted to the video device 23.

At step 510, audio data decoded in the receiving part 200 are transmitted to the audio device 24.

At step 511, touch data demultiplexed in the receiving part 200 in the step 507 are transmitted to the vibration device 25.

At step 512, odor data demultiplexed in the receiving part 200 in the step 507 are transmitted to the odor device 26.

At step 513, taste data demultiplexed in the receiving part 200 in the step 507 are transmitted to the taste device 27.

Accordingly, at step 514, the video device 23 outputs the video data on a screen and, at step 515, the audio device 24 outputs the audio data on a speaker. At step 516, the vibration device 25 analyzes the touch data and gives vibration to the user to feel the sense of touch. At step 517, the odor device 26 analyzes the odor data and sprays a chemical aromatic so that the user can feel the odor. At step 518, the taste device 270 analyzes the taste data and releases a chemical taste forming material so that the user can feel the taste.

The method of the present invention, which is described above, can be embodied as a program and stored in a computer-readable recording medium, e.g., CD-ROM, RAM, ROM, floppy disks, hard disks, magnetooptical disks and the like. As the process can be easily implemented by those of ordinary skill in the art, further description on it will not be provided herein.

Since the present invention describes vibration, odor, and taste expressed in multimedia data by using touch/odor/taste data descriptors and transmits them to corresponding devices on the user's part that receives the multimedia service, the user can receive more realistic real-sense multimedia service as well as sensing the five senses expressed in the multimedia data.

Also, the present invention can provide the user with vibration, odor and taste that conform to each scene of the multimedia data with the vibration device, odor device and taste device by transmitting the synchronized video data, audio data, touch data, odor data and taste data based on each frame of the multimedia data. Therefore, the technology of the present invention can make the user feel the five senses expressed in each scene of the multimedia data precisely.

While the present invention has been described with respect to certain preferred embodiments, it will be apparent to those skilled in the art that various changes and modifications may be made without departing from the scope of the invention as defined in the following claims.

## Claims

1. An apparatus for synchronizing and transmitting five sensory data, comprising:
a video/audio data generating means for generating video/audio data by receiving multimedia data from an external device;
a touch data describing means for describing vibration expressed in the multimedia data received from the external device based on a predefined touch data descriptor;
an odor data describing means for describing an odor expressed in the multimedia data transmitted from the external device based on a predefined odor data descriptor;
a taste data describing means for describing a taste expressed in the multimedia data transmitted from the external device based on a predefined taste data descriptor;
a video/audio packet forming means for forming video/audio packets out of the video/audio data generated in the video/audio generating means;
a touch/odor/taste packet forming means for forming and sequentially combining a touch packet, an odor packet, and a taste packet out of the touch, odor and taste data which are described in the touch data describing means, the odor data describing means, and the taste data describing means, respectively;
a multiplexing means for multiplexing the video/audio packets generated in the video/audio packet generating means with the touch packet, the odor packet and the taste packet formed in the touch/odor/taste packet forming means to thereby synchronize the video/audio packets with the touch/odor/taste packets; and
a transmitting means for transmitting a multiplexed packet multiplexed in the multiplexing means.

2. The apparatus as recited in claim 1, wherein the touch data describing means describes vibration expressed in the multimedia data transmitted from the external device based on a descriptor describing whether touch data are described; a descriptor describing whether right/left movement is described; a descriptor describing whether up/down movement is described; a descriptor describing whether back/forth movement is described; a descriptor describing a distance of movement; a descriptor describing a speed of movement; a descriptor describing an acceleration of movement; a descriptor describing whether right/left rotation is described; a descriptor describing an angle of right/left rotation; a descriptor describing a speed of right/left rotation; and a descriptor describing an acceleration of right/left rotation.

3. The apparatus as recited in claim 2, wherein the odor data describing means describes an odor expressed in the multimedia data transmitted from the external device based on a descriptor describing whether the odor data are described; a descriptor describing a kind of the odor; and a descriptor describing an intensity of the odor.

4. The apparatus as recited in claim 3, wherein the taste data describing means describes a taste expressed in the multimedia data transmitted from the external device based on a descriptor describing whether the taste data are described; a descriptor describing a kind of the taste; and a descriptor describing an intensity of the taste.

5. The apparatus as recited in claim 1, wherein the touch/odor/taste packet forming means forms a touch packet including information on whether the touch data are described, information on a packet length, and information on the touch data descriptors described in the touch data describing means; an odor packet including information on whether odor data are described, information on an odor packet length, and information on the odor data descriptors described in the odor data describing means; and a taste packet including information on whether taste data are described, information on a taste packet length, and information on the taste data descriptors described in the taste data describing means.

6. The apparatus as recited in claim 1, wherein the multiplexing means adds the touch/odor/taste packets formed in the touch/odor/taste packet forming means to the end of a plurality of video/audio packets generated in the video/audio generating means on a basis of the multimedia data frame to thereby multiplex and synchronize the video/audio packets with the touch/odor/taste packets.

7. A method for synchronizing and transmitting five sensory data, comprising the steps of:
a) generating video/audio data by receiving multimedia data from an external device;
b) describing vibration, an odor and a taste expressed in the multimedia data transmitted from the external device to generate touch data, odor data and taste data based on predefined touch, odor and taste data descriptors, respectively;
c) forming video/audio packets out of the video/audio data; and forming and sequentially combining a touch packet, an odor packet and a taste packet out of the touch data, the odor data and the taste data, respectively;
d) performing synchronization by multiplexing the video/audio packets, the touch packet, the odor packet and the taste packet; and
e) transmitting a multiplexed packet to a receiving part.

8. The method as recited in claim 7, wherein in the step b), the vibration expressed in the multimedia data transmitted from the external device is described based on a descriptor describing whether touch data are described; a descriptor describing whether right/left movement is described; a descriptor describing whether up/down movement is described; a descriptor describing whether back/forth movement is described; a descriptor describing a distance of movement; a descriptor describing a speed of movement; a descriptor describing an acceleration of movement; a descriptor describing whether right/left rotation is described; a descriptor describing an angle of right/left rotation; a descriptor describing a speed of right/left rotation; a descriptor describing an acceleration of right/left rotation;
the odor expressed in the multimedia data received from the external device is described based on a descriptor describing whether the odor data are described; a descriptor describing a kind of the odor; and a descriptor describing an intensity of the odor; and,
the taste expressed in the multimedia data received from the external device is described based on a descriptor describing whether the taste data are described; a descriptor describing a kind of the taste; and a descriptor describing an intensity of the taste.

9. The method as recited in claim 7, wherein in the step d), the touch packet, the odor packet and the taste packet are added to the end of a plurality of video/audio packets on a basis of a multimedia data frame to thereby multiplex and synchronize the video/audio packets with the touch packet, the odor packet, and the taste packet.

10. A system for providing actual-feeling multimedia data, comprising:
a video/audio data generating means for generating video/audio data by receiving multimedia data from an external device;
a touch data describing means for describing vibration expressed in the multimedia data transmitted from the external device based on a predefined touch data descriptor;
an odor data describing means for describing an odor expressed in the multimedia data received from the external device based on a predefined odor data descriptor;
a taste data describing means for describing a taste expressed in the multimedia data received from the external device based on a predefined taste data descriptor;
a video/audio packet forming means for forming video/audio packets out of the video/audio data generated in the video/audio generating means;
a touch/odor/taste packet forming means for forming and sequentially combining a touch packet, an odor packet, and a taste packet out of the touch, odor and taste data described in the touch data describing means, the odor data describing means, and the taste data describing means, respectively;
a multiplexing means for multiplexing the video/audio packets generated in the video/audio packet generating means and the touch packet, the odor packet and the taste packet formed in the touch/odor/taste packet forming means to thereby synchronize the video/audio packets with the touch/odor/taste packets;
a transmitting means, for transmitting a multiplexed packet obtained in the multiplexing means;
a receiving means for receiving the multiplexed packet;
a demultiplexing means for demultiplexing the multiplexed packet received by the receiving means into the video data, the audio data, the touch data, the odor data and the taste data;
a video device for decoding and outputting the video data demultiplexed by the demultiplexing means;
an audio device for decoding and outputting the audio data demultiplexed by the demultiplexing means;
a vibration device for providing vibration to a user by interpreting the touch data demultiplexed by the demultiplexing means;
an odor device for spraying chemical aromatics to a user by interpreting the odor data demultiplexed by the demultiplexing means; and
a taste device for releasing a taste forming material to a user by interpreting the taste data demultiplexed by the demultiplexing means.

11. The system as recited in claim 10, wherein the demultiplexing means deletes network-related information from the received packet in form of a compressed stream by depacketizing, divides the depacketized packet into the video data, the audio data, the touch data, the odor data and the taste data on a basis of a multimedia data frame, and transmits the video data, the audio data, the touch data, the odor data and the taste data to corresponding devices based on header information.

12. The system as recited in claim 10, wherein the vibration device moves to right and left, back and forth, and up and down or rotates by interpreting the touch data, which are demultiplexed in the demultiplexing means, based on a predefined touch data descriptor; and a starting time and a duration time of movement or rotation operation are synchronized with a moving picture and a sound outputted from the video device and the audio device, respectively.

13. The system as recited in claim 12, wherein the odor device sprays the chemical aromatics by interpreting the odor data, which are demultiplexed in the demultiplexing means, based on a predetermined odor data descriptor; and a starting time and a duration time of spraying operation are synchronized with a moving picture and a sound outputted from the video device and the audio device, respectively.

14. The system as recited in claim 13, wherein the taste device releases taste forming materials by interpreting the taste data, which are demultiplexed in the demultiplexing means, based on a predetermined taste data descriptor; and a starting time and a duration time of releasing operation are synchronized with a moving picture and a sound outputted from the video device and the audio device, respectively.

15. A method for providing actual-feeling multimedia data in an actual-feeling multimedia data providing system, comprising the steps of:
a) generating video/audio data by receiving multimedia data from an external device;
b) describing vibration, an odor and a taste expressed in the multimedia data transmitted from the external device to thereby generate touch data, odor data and taste data based on predefined touch, odor and taste data descriptors, respectively;
c) forming video/audio packets out of the video/audio data; and forming and sequentially combining a touch packet, an odor packet and a taste packet out of the touch data, the odor data and the taste data, respectively;
d) performing synchronization by multiplexing the video/audio packets with the touch packet, the odor packet and the taste packet;
e) transmitting a multiplexed packet to a receiving part;
f) receiving the multiplexed packet and demultiplexing the multiplexed packet received by the receiving means into the video data, the audio data, the touch data, the odor data and the taste data;
g) decoding and outputting the demultiplexed video data and the demultiplexed audio data;
h) providing a user witch vibration by interpreting the demultiplexed touch data;
i) spraying chemical aromatics to the user by interpreting the demultiplexed odor data; and
j) a taste device for releasing taste forming materials to a user by interpreting the demultiplexed taste data.

## Patentansprüche

1. Vorrichtung zum Synchronisieren und Senden von fünf sensorischen Daten, die Folgendes umfasst:
ein Video-/Audio-Datenerzeugungsmittel zum Erzeugen von Video-/Audio-Daten durch Empfangen von Multimediadaten von einem externen Gerät;
ein Berührungsdatenbeschreibungsmittel zum Beschreiben von Vibrationen, die in den Multimediadaten ausgedrückt sind, die von dem externen Gerät kommend empfangen werden, anhand eines zuvor festgelegten Berührungsdatendeskriptors;
ein Geruchsdatenbeschreibungsmittel zum Beschreiben eines Geruches, der in den Multimediadaten ausgedrückt ist, die von dem externen Gerät gesendet werden, anhand eines zuvor festgelegten Geruchsdatendeskriptors;
ein Geschmacksdatenbeschreibungsmittel zum Beschreiben eines Geschmacks, der in den Multimediadaten ausgedrückt ist, die von dem externen Gerät gesendet werden, anhand eines zuvor festgelegten Geschmacksdatendeskriptors;
ein Video-/Audiopaket-Bildungsmittel zum Bilden von Video-/Audiopaketen aus den in dem Video-/Audio-Erzeugungsmittel erzeugten Video-/Audio-Daten;
ein Berührungs-/Geruchs-/Geschmackspaket-Bildungsmittel zum Bilden und sequenziellen Kombinieren eines Berührungspaketes, eines Geruchspaketes und eines Geschmackspaketes aus den Berührungs-, Geruchs- und Geschmacksdaten, die in dem Berührungsdatenbeschreibungsmittel, dem Geruchsdatenbeschreibungsmittel bzw. dem Geschmacksdatenbeschreibungsmittel beschrieben sind;
ein Multiplexierungsmittel zum Multiplexieren der in dem Video-/Audiopaket-Erzeugungsmittel erzeugten Video-/Audiopakete mit dem in dem Berührungs-/Geruchs-/Geschmackspaket-Bildungsmittel gebildeten Berührungspaket, Geruchspaket und Geschmackspaket, um **dadurch** die Video-/Audiopakete mit den Berührungs-/Geruchs-/Geschmackspaketen zu synchronisieren; und
ein Sendemittel zum Senden eines multiplexierten Paketes, das in dem Multiplexierungsmittel multiplexiert wurde.

2. Vorrichtung nach Anspruch 1, wobei das Berührungsdatenbeschreibungsmittel Vibrationen, die in den von dem externen Gerät gesendeten Multimediadaten ausgedrückt sind, anhand von Folgendem beschreibt: eines Deskriptors, der beschreibt, ob Berührungsdaten beschrieben werden; eines Deskriptors, der beschreibt, ob eine Links-Rechts-Bewegung beschrieben wird; eines Deskriptors, der beschreibt, ob eine Aufwärts-Abwärts-Bewegung beschrieben wird; eines Deskriptors, der beschreibt, ob eine Vorwärts-Rückwärts-Bewegung beschrieben wird; eines Deskriptors, der eine Bewegungsdistanz beschreibt; eines Deskriptors, der eine Bewegungsgeschwindigkeit beschreibt; eines Deskriptors, der eine Bewegungsbeschleunigung beschreibt; eines Deskriptors, der beschreibt, ob eine Links-Rechts-Drehung beschrieben wird; eines Deskriptors, der einen Winkel einer Links-Rechts-Drehung beschreibt; eines Deskriptors, der eine Geschwindigkeit einer Links-Rechts-Drehung beschreibt; und eines Deskriptors, der eine Beschleunigung einer Links-Rechts-Drehung beschreibt.

3. Vorrichtung nach Anspruch 2, wobei das Geruchsdatenbeschreibungsmittel einen Geruch, der in den Multimediadaten ausgedrückt ist, die von dem externen Gerät gesendet werden, anhand von Folgendem beschreibt: eines Deskriptors, der beschreibt, ob die Geruchsdaten beschrieben werden; eines Deskriptors, der eine Art des Geruchs beschreibt; und eines Deskriptors, der eine Intensität des Geruchs beschreibt.

4. Vorrichtung nach Anspruch 3, wobei das Geschmacksdatenbeschreibungsmittel einen Geschmack, der in den Multimediadaten ausgedrückt ist, die von dem externen Gerät gesendet werden, anhand von Folgendem beschreibt: eines Deskriptors, der beschreibt, ob die Geschmacksdaten beschrieben werden; eines Deskriptors, der eine Art des Geschmacks beschreibt; und eines Deskriptors, der eine Intensität des Geschmacks beschreibt.

5. Vorrichtung nach Anspruch 1, wobei das Berührungs-/Geruchs-/Geschmackspaket-Bildungsmittel ein Berührungspaket bildet, das Folgendes enthält: Informationen darüber, ob die Berührungsdaten beschrieben werden, Informationen über eine Paketlänge, und Informationen über die Berührungsdatendeskriptoren, die in dem Berührungsdatenbeschreibungsmittel beschrieben werden; und ein Geruchspaket bildet, das Folgendes enthält: Informationen darüber, ob Geruchsdaten beschrieben werden, Informationen über eine Geruchspaketlänge, und Informationen über die Geruchsdatendeskriptoren, die in dem Geruchsdatenbeschreibungsmittel beschrieben werden; und ein Geschmackspaket bildet, das Folgendes enthält: Informationen darüber, ob Geschmacksdaten beschrieben werden, Informationen über eine Geschmackspaketlänge, und Informationen über die Geschmacksdatendeskriptoren, die in dem. Geschmacksdatenbeschreibungsmittel beschrieben werden.

6. Vorrichtung nach Anspruch 1, wobei das Multiplexierungsmittel die in dem Berührungs-/Geruchs-/Geschmackspaket-Bildungsmittel gebildeten Berührungs-/Geruchs-/Geschmackspakete an das Ende mehrerer in dem Video-/Audio-Erzeugungsmittel erzeugter Video-/Audiopakete auf der Grundlage des Multimediadatenframes anhängt, um **dadurch** die Video-/Audiopakete mit den Berührungs-/Geruchs-/Geschmackspaketen zu multiplexieren und zu synchronisieren.

7. Verfahren zum Synchronisieren und Senden von fünf sensorischen Daten, das folgende Schritte enthält:
a) Erzeugen von Video-/Audio-Daten durch Empfangen von Multimediadaten von einem externen Gerät;
b) Beschreiben von Vibrationen, eines Geruchs und eines Geschmacks, die in den Multimediadaten ausgedrückt sind, die von dem externen Gerät gesendet werden, um Berührungsdaten, Geruchsdaten und Geschmacksdaten anhand zuvor festgelegter Berührungs-, Geruchs- bzw. Geschmacksdatendeskriptoren zu erzeugen,
c) Bilden von Video-/Audiopaketen aus den Video-/Audiodaten; und Bilden und sequenzielles Kombinieren eines Berührungspaketes, eines Geruchspaketes und eines Geschmackspaketes aus den Berührungsdaten, den Geruchsdaten bzw. den Geschmacksdaten;
d) Durchführen einer Synchronisation durch Multiplexieren der Video-/Audiopakete, des Berührungspaketes, des Geruchspaketes und des Geschmackspaketes; und
e) Senden eines multiplexierten Paketes an einen Empfangsteil.

8. Verfahren nach Anspruch 7, wobei in Schritt b)
die Vibrationen, die in den von dem externen Gerät gesendeten Multimediadaten ausgedrückt sind, anhand von Folgendem beschrieben werden: eines Deskriptors, der beschreibt, ob Berührungsdaten beschrieben werden; eines Deskriptors, der beschreibt, ob eine Links-Rechts-Bewegung beschrieben wird; eines Deskriptors, der beschreibt, ob eine Aufwärts-Abwärts-Bewegung beschrieben wird; eines Deskriptors, der beschreibt, ob eine Vorwärts-Rückwärts-Bewegung beschrieben wird; eines Deskriptors, der eine Bewegungsdistanz beschreibt; eines Deskriptors, der eine Bewegungsgeschwindigkeit beschreibt; eines Deskriptors, der eine Bewegungsbeschleunigung beschreibt; eines Deskriptors, der beschreibt, ob eine Links-Rechts-Drehung beschrieben wird; eines Deskriptors, der einen Winkel einer Links-Rechts-Drehung beschreibt; eines Deskriptors, der eine Geschwindigkeit einer Links-Rechts-Drehung beschreibt; eines Deskriptors, der eine Beschleunigung einer Links-Rechts-Drehung beschreibt;
der Geruch, der in den Multimediadaten ausgedrückt ist, der von dem externen Gerät kommend empfangen werden, anhand von Folgendem beschrieben wird: eines Deskriptors, der beschreibt, ob die Geruchsdaten beschrieben werden; eines Deskriptors, der eine Art des Geruchs beschreibt; und eines Deskriptors, der eine Intensität des Geruchs beschreibt; und
der Geschmack, der in den Multimediadaten ausgedrückt ist, die von dem externen Gerät kommend empfangen werden, anhand von Folgendem beschrieben wird: eines Deskriptors, der beschreibt, ob die Geschmacksdaten beschrieben werden; eines Deskriptors, der eine Art des Geschmacks beschreibt; und eines Deskriptors, der eine Intensität des Geschmacks beschreibt.

9. Verfahren nach Anspruch 7, wobei in Schritt d) das Berührungspaket, das Geruchspaket und das Geschmackspaket an das Ende mehrerer Video-/Audiopakete auf der Grundlage eines Multimediadatenframes angehängt werden, um **dadurch** die Video-/Audiopakete mit dem Berührungspaket, dem Geruchspaket und dem Geschmackspaket zu multiplexieren und zu synchronisieren.

10. System zum Bereitstellen gefühlsechter Multimediadaten, das Folgendes umfasst:
ein Video-/Audio-Datenerzeugungsmittel zum Erzeugen von Video-/Audio-Daten durch Empfangen von Multimediadaten von einem externen Gerät;
ein Berührungsdatenbeschreibungsmittel zum Beschreiben von Vibrationen, die in den Multimediadaten ausgedrückt sind, die von dem externen Gerät gesendet werden, anhand eines zuvor festgelegten Berührungsdatendeskriptors;
ein Geruchsdatenbeschreibungsmittel zum Beschreiben eines Geruches, der in den Multimediadaten ausgedrückt ist, die von dem externen Gerät kommend empfangen werden, anhand eines zuvor festgelegten Geruchsdatendeskriptors;
ein Geschmacksdatenbeschreibungsmittel zum Beschreiben eines Geschmacks, der in den Multimediadaten ausgedrückt ist, die von dem externen Gerät kommend empfangen werden, anhand eines zuvor festgelegten Geschmacksdatendeskriptors;
ein Video-/Audiopaket-Bildungsmittel zum Bilden von Video-/Audiopaketen aus den in dem Video-/Audio-Erzeugungsmittel erzeugten Video-/Audio-Daten;
ein Berührungs-/Geruchs-/Geschmackspaket-Bildungsmittel zum Bilden eines Berührungspaketes, eines Geruchspaketes und eines Geschmackspaketes aus den Berührungs-, Geruchs- und Geschmacksdaten, die in dem Berührungsdatenbeschreibungsmittel, dem Geruchsdatenbeschreibungsmittel bzw. dem Geschmacksdatenbeschreibungsmittel beschrieben werden;
ein Multiplexierungsmittel zum Multiplexieren der in dem Video-/Audiopaket-Erzeugungsmittel erzeugten Video-/Audiopakete und der in dem Berührungs-/Geruchs-/Geschmackspaket-Bildungsmittel gebildeten Berührungspaket, Geruchspaket und Geschmackspaket, um **dadurch** die Video-/Audiopakete mit den Berührungs-/Geruchs-/Geschmackspaketen zu synchronisieren;
ein Sendemittel zum Senden eines multiplexierten Paketes, das in dem Multiplexierungsmittel multiplexiert wurde;
ein Demultiplexierungsmittel zum Demultiplexieren des durch das Empfangsmittel empfangenen multiplexierten Paketes in die Videodaten, die Audiodaten, die Berührungsdaten, die Geruchsdaten und die Geschmacksdaten;
ein Videogerät zum Decodieren und Ausgeben der durch das Demultiplexierungsmittel demultiplexierten Videodaten;
ein Audiogerät zum Decodieren und Ausgeben der durch das Demultiplexierungsmittel demultiplexierten Audiodaten;
ein Vibrationsgerät zum Bereitstellen von Vibrationen für einen Nutzer durch Interpretieren der durch das Demultiplexierungsmittel demultiplexierten Berührungsdaten;
ein Geruchsgerät zum Versprühen chemischer Aromastoffe für einen Nutzer durch Interpretieren der durch das Demultiplexierungsmittel demultiplexierten Geruchsdaten; und
ein Geschmacksgerät zum Freisetzen von Geschmacksbildnern für einen Nutzer durch Interpretieren der durch das Demultiplexierungsmittel demultiplexierten Geschmacksdaten.

11. System nach Anspruch 10, wobei das Demultiplexierungsmittel netzwerkbezogene Informationen aus dem empfangenen Paket in Form eines komprimierten Stromes durch Entpaketisieren löscht, das entpaketisierte Paket in die Videodaten, die Audiodaten, die Berührungsdaten, die Geruchsdaten und die Geschmacksdaten auf der Grundlage eines Multimediadatenframes teilt und die Videodaten, die Audiodaten, die Berührungsdaten, die Geruchsdaten und die Geschmacksdaten anhand von Header-Informationen an entsprechende Geräte sendet.

12. System nach Anspruch 10, wobei sich das Vibrationsgerät durch Interpretieren der in dem Demultiplexierungsmittel demultiplexierten Berührungsdaten anhand eines zuvor festgelegten Berührungsdatendeskriptors nach rechts und links, vor und zurück und auf und ab bewegt oder dreht; und eine Anfangszeit und eine Dauer des Bewegungs- oder Drehungsvorgangs mit einem bewegten Bild und einem Ton, die aus dem Videogerät bzw. dem Audiogerät ausgegeben werden, synchronisiert werden.

13. System nach Anspruch 12, wobei das Geruchsgerät die chemischen Aromastoffe durch Interpretieren der in dem Demultiplexierungsmittel demultiplexierten Geruchsdaten anhand eines zuvor festgelegten Geruchsdatendeskriptors versprüht; und eine Anfangszeit und eine Dauer des Sprühvorgangs mit einem bewegten Bild und einem Ton, die aus dem Videogerät bzw. dem Audiogerät ausgegeben werden, synchronisiert werden.

14. System nach Anspruch 13, wobei das Geschmacksgerät Geschmacksbildner durch Interpretieren der in dem Demultiplexierungsmittel demultiplexierten Geschmacksdaten anhand eines zuvor festgelegten Geschmacksdatendeskriptors frei setzt; und eine Anfangszeit und eine Dauer des Freisetzungsvorgangs mit einem bewegten Bild und einem Ton, die aus dem Videogerät bzw. dem Audiogerät ausgegeben werden, synchronisiert werden.

15. Verfahren zum Bereitstellen gefühlsechter Multimediadaten in einem System zum Bereitstellen gefühlsechter Multimediadaten, wobei das Verfahren folgende Schritte enthält:
a) Erzeugen von Video-/Audio-Daten durch Empfangen von Multimediadaten von einem externen Gerät;
b) Beschreiben von Vibrationen, eines Geruchs und eines Geschmacks, die in den Multimediadaten ausgedrückt sind, die von dem externen Gerät gesendet werden, um **dadurch** Berührungsdaten, Geruchsdaten und Geschmacksdaten anhand zuvor festgelegter Berührungs-, Geruchs- bzw. Geschmacksdatendeskriptoren zu erzeugen;
c) Bilden von Video-/Audiopaketen aus den Video-/Audiodaten; und Bilden und sequenzielles Kombinieren eines Berührungspaketes, eines Geruchspaketes und eines Geschmackspaketes aus den Berührungsdaten, den Geruchsdaten bzw. den Geschmacksdaten;
d) Durchführen einer Synchronisation durch Multiplexieren der Video-/Audiopakete mit dem Berührungspaket, dem Geruchspaket und dem Geschmackspaket;
e) Senden eines multiplexierten Paketes an einen Empfangsteil;
f) Empfangen des multiplexierten Paketes und Demultiplexieren des durch das Empfangsmittels empfangenen multiplexierten Paketes in die Videodaten, die Audiodaten, die Berührungsdaten, die Geruchsdaten und die Geschmacksdaten;
g) Decodieren und Ausgeben der demultiplexierten Videodaten und der demultiplexierten Audiodaten;
h) Bereitstellen von Vibrationen für einen Nutzer durch Interpretieren der demultiplexierten Berührungsdaten;
i) Versprühen chemischer Aromastoffe für den Nutzer durch Interpretieren der demultiplexierten Geruchsdaten; und
j) ein Geschmacksgerät zum Freisetzen von Geschmacksbildnern für einen Nutzer durch Interpretieren der demultiplexierten Geschmacksdaten.

## Revendications

1. Appareil de synchronisation et de transmission de données multi-sensorielles, comprenant :
un moyen de génération de données vidéo/audio destiné à générer des données vidéo/audio en recevant des données multimédia depuis un dispositif externe ;
un moyen de description de données liées au toucher, destiné à décrire une vibration exprimée dans les données multimédia reçues depuis le dispositif externe sur la base d'un descripteur prédéfini de données liées au toucher ;
un moyen de description de données liées à l'odorat, destiné à décrire une odeur exprimée dans les données multimédia transmises depuis le dispositif externe sur la base d'un descripteur prédéfini de données liées à l'odorat ;
un moyen de description de données liées au goût, destiné à décrire un goût exprimé dans les données multimédia transmises depuis le dispositif externe sur la base d'un descripteur prédéfini de données liées au goût ;
un moyen de formation de paquets vidéo/audio destiné à former des paquets vidéo/audio à partir des données vidéo/audio générées dans le moyen de génération de données vidéo/audio ;
un moyen de formation de paquets liés au toucher/à l'odorat/au goût, destiné à former et à combiner séquentiellement un paquet lié au toucher, un paquet lié à l'odorat et un paquet lié au goût à partir des données liées au toucher, à l'odorat et au goût qui sont décrites dans le moyen de description de données liées au toucher, le moyen de description de données liées à l'odorat et le moyen de description de données liées au goût, respectivement ;
un moyen de multiplexage destiné à multiplexer les paquets vidéo/audio générés dans le moyen de génération de paquets vidéo/audio avec le paquet lié au toucher, le paquet lié à l'odorat et le paquet lié au goût formés dans le moyen de formation de paquets liés au toucher/à l'odorat/au goût de façon à synchroniser les paquets vidéo/audio avec les paquets liés au toucher/à l'odorat/au goût ; et
un moyen de transmission destiné à transmettre un paquet multiplexé dans le moyen de multiplexage.

2. Appareil selon la revendication 1, dans lequel le moyen de description de données liées au toucher décrit une vibration exprimée dans les données multimédia transmises depuis le dispositif externe sur la base d'un descripteur qui décrit si des données liées au toucher sont décrites ; d'un descripteur qui décrit si un mouvement vers la droite/vers la gauche est décrit ; d'un descripteur qui décrit si un mouvement vers le haut/vers le bas est décrit ; d'un descripteur qui décrit si un mouvement vers l'arrière/vers l'avant est décrit ; d'un descripteur qui décrit une distance de mouvement ; d'un descripteur qui décrit une vitesse de mouvement ; d'un descripteur qui décrit une accélération de mouvement ; d'un descripteur qui décrit si une rotation vers la droite/vers la gauche est décrite ; d'un descripteur qui décrit un angle de rotation vers la droite/vers la gauche ; d'un descripteur qui décrit une vitesse de rotation vers la droite/vers la gauche ; et d'un descripteur qui décrit une accélération de la rotation vers la droite/vers la gauche.

3. Appareil selon la revendication 2, dans lequel le moyen de description de données liées à l'odorat décrit une odeur exprimée dans les données multimédia transmises depuis le dispositif externe sur la base d'un descripteur qui décrit si les données liées à l'odeur sont décrites ; d'un descripteur qui décrit un type de l'odeur ; et d'un descripteur qui décrit une intensité de l'odeur.

4. Appareil selon la revendication 3, dans lequel le moyen de description de données liées au goût décrit un goût exprimé dans les données multimédia transmises depuis le dispositif externe sur la base d'un descripteur qui décrit si les données liées au goût sont décrites ; d'un descripteur qui décrit un type du goût ; et d'un descripteur qui décrit une intensité du goût.

5. Appareil selon la revendication 1, dans lequel le moyen de formation de paquets liés au toucher/à l'odorat/au goût forme un paquet lié au toucher qui comprend des informations relatives au fait que les données liées au toucher soient décrites, des informations relatives à la longueur des paquets et des informations relatives aux descripteurs des données liées au toucher décrits dans le moyen de description de données liées au toucher ; un paquet lié à l'odorat qui comprend des informations relatives au fait que les données liées à l'odorat soient décrites, des informations relatives à la longueur du paquet lié à l'odorat et des informations relatives aux descripteurs des données liées à l'odorat décrits dans le moyen de description de données liées à l'odorat ; et un paquet lié au goût qui comprend des informations relatives au fait que les données liées au goût soient décrites, des informations relatives à la longueur du paquet lié au goût et des informations relatives aux descripteurs des données liées au goût décrits dans le moyen de description de données liées au goût.

6. Appareil selon la revendication 1, dans lequel le moyen de multiplexage ajoute les paquets liés au toucher/à l'odorat/au goût formés dans le moyen de formation de paquets liés au toucher/à l'odorat/au goût à la fin d'une pluralité de paquets vidéo/audio générés dans le moyen de génération vidéo/audio sur la base de la trame des données multimédia afin de multiplexer et de synchroniser les paquets vidéo/audio avec les paquets liés au toucher/à l'odorat/au goût.

7. Procédé de synchronisation et de transmission de données multi-sensorielles, comprenant les étapes consistant à :
a) générer des données vidéo/audio en recevant des données multimédia depuis un dispositif externe ;
b) décrire une vibration, une odeur et un goût exprimés dans les données multimédia transmises depuis le dispositif externe afin de générer des données liées au toucher, des données liées à l'odorat et des données liées au goût sur la base de descripteurs prédéfinis liés au toucher, à l'odorat et au goût, respectivement ;
c) former des paquets vidéo/audio à partir des données vidéo/audio ; et former et combiner séquentiellement un paquet lié au toucher, un paquet lié à l'odorat et un paquet lié au goût à partir des données liées au toucher, des données liées à l'odorat et des données liées au goût, respectivement ;
d) effectuer une synchronisation en multiplexant les paquets vidéo/audio, le paquet lié au toucher, le paquet lié à l'odorat et le paquet lié au goût ; et
e) transmettre un paquet multiplexé à une partie de réception.

8. Procédé selon la revendication 7, dans lequel, à l'étape b), la vibration exprimée dans les données multimédia transmises depuis le dispositif externe est décrite sur la base d'un descripteur qui décrit si les données liées au toucher sont décrites ; d'un descripteur qui décrit si un mouvement vers la droite/vers la gauche est décrit ; d'un descripteur qui décrit si un mouvement vers le haut/vers le bas est décrit ; d'un descripteur qui décrit si un mouvement vers l'arrière/vers l'avant est décrit ; d'un descripteur qui décrit une distance de mouvement ; d'un descripteur qui décrit une vitesse de mouvement ; d'un descripteur qui décrit une accélération de mouvement ; d'un descripteur qui décrit si une rotation vers la droite/vers la gauche est décrite ; d'un descripteur qui décrit un angle de rotation vers la droite/vers la gauche ; d'un descripteur qui décrit une vitesse de rotation vers la droite/vers la gauche ; d'un descripteur qui décrit une accélération de la rotation vers la droite/vers la gauche ;
l'odeur exprimée dans les données multimédia reçues depuis le dispositif externe est décrite sur la base d'un descripteur qui décrit si les données liées à l'odeur sont décrites ; d'un descripteur qui décrit un type de l'odeur ; et d'un descripteur qui décrit une intensité de l'odeur ; et
le goût exprimé dans les données multimédia reçues depuis le dispositif externe est décrit sur la base d'un descripteur qui décrit si les données liées au goût sont décrites ; d'un descripteur qui décrit un type du goût ; et d'un descripteur qui décrit une intensité du goût.

9. Procédé selon la revendication 7, dans lequel, à l'étape d), le paquet lié au toucher, le paquet lié à l'odorat et le paquet lié au goût sont ajoutés à la fin d'une pluralité de paquets vidéo/audio sur la base d'une trame des données multimédia afin de multiplexer et de synchroniser les paquets vidéo/audio avec le paquet lié au toucher, le paquet lié à l'odorat et le paquet lié au goût.

10. Système destiné à fournir des données multimédia de sensations réelles, comprenant :
un moyen de génération de données vidéo/audio destiné à générer des données vidéo/audio en recevant des données multimédia depuis un dispositif externe ;
un moyen de description de données liées au toucher, destiné à décrire une vibration exprimée dans les données multimédia transmises depuis le dispositif externe sur la base d'un descripteur prédéfini de données liées au toucher ;
un moyen de description de données liées à l'odorat, destiné à décrire une odeur exprimée dans les données multimédia reçues depuis le dispositif externe sur la base d'un descripteur prédéfini de données liées à l'odorat ;
un moyen de description de données liées au goût, destiné à décrire un goût exprimé dans les données multimédia reçues depuis le dispositif externe sur la base d'un descripteur prédéfini de données liées au goût ;
un moyen de formation de paquets vidéo/audio destiné à former des paquets vidéo/audio à partir des données vidéo/audio générées dans le moyen de génération de données vidéo/audio ;
un moyen de formation de paquets liés au toucher/à l'odorat/au goût, destiné à former et à combiner séquentiellement un paquet lié au toucher, un paquet lié à l'odorat et un paquet lié au goût à partir des données liées au toucher, à l'odorat et au goût qui sont décrites dans le moyen de description de données liées au toucher, le moyen de description de données liées à l'odorat et le moyen de description de données liées au goût, respectivement ;
un moyen de multiplexage destiné à multiplexer les paquets vidéo/audio générés dans le moyen de génération de paquets vidéo/audio avec le paquet lié au toucher, le paquet lié à l'odorat et le paquet lié au goût formés dans le moyen de formation de paquets liés au toucher/à l'odorat/au goût de façon à synchroniser les paquets vidéo/audio avec les paquets liés au toucher/à l'odorat/au goût ; et
un moyen de transmission destiné à transmettre un paquet multiplexé obtenu dans le moyen de multiplexage ;
un moyen de réception destiné à recevoir le paquet multiplexé ;
un moyen de démultiplexage destiné à démultiplexer le paquet multiplexé reçu par le moyen de réception en données vidéo, données audio, données liées au toucher, données liées à l'odorat et données liées au goût ;
un dispositif vidéo destiné à décoder et à transmettre les données vidéo démultiplexées par le moyen de démultiplexage ;
un dispositif audio destiné à décoder et à transmettre les données audio démultiplexées par le moyen de démultiplexage ;
un dispositif de vibration destiné à fournir une vibration à un utilisateur en interprétant les données liées au toucher démultiplexées par le moyen de démultiplexage ;
un dispositif de diffusion d'odeur destiné à diffuser des arômes chimiques à un utilisateur en interprétant les données liées à l'odorat démultiplexées par le moyen de démultiplexage ; et
un dispositif de diffusion de goût destiné à diffuser une matière formant un goût à un utilisateur en interprétant les données liées au goût démultiplexées par le moyen de démultiplexage.

11. Système selon la revendication 10, dans lequel le moyen de démultiplexage supprime des informations relatives au réseau du paquet reçu sous la forme d'un flux compressé en effectuant une décomposition, divise le paquet décomposé en données vidéo, en données audio, en données liées au toucher, en données liées à l'odorat et en données liées au goût sur la base d'une trame de données multimédia, et transmet les données vidéo, les données audio, les données liées au toucher, les données liées à l'odorat et les données liées au goût à des dispositifs correspondants sur la base d'informations d'en-têtes.

12. Système selon la revendication 10, dans lequel le dispositif de vibration se déplace vers la droite et vers la gauche, vers l'arrière et vers l'avant, et vers le haut et vers le bas ou tourne en interprétant les données liées au toucher, qui sont démultiplexées dans le moyen de démultiplexage, sur la base d'un descripteur prédéfini de données liées au toucher ; et un moment de début et une durée de mouvement ou de rotation sont synchronisés avec une image en mouvement et un son transmis depuis le dispositif vidéo et le dispositif audio, respectivement.

13. Système selon la revendication 12, dans lequel le dispositif de diffusion d'odeur diffuse les arômes chimiques en interprétant les données liées à l'odorat, qui sont démultiplexées dans le moyen de démultiplexage, sur la base d'un descripteur prédéterminé de données liées à l'odorat ; et un moment de début et une durée de l'opération de diffusion sont synchronisés avec une image en mouvement et un son transmis depuis le dispositif vidéo et le dispositif audio, respectivement.

14. Système selon la revendication 13, dans lequel le dispositif de diffusion de goût diffuse des matières formant un goût en interprétant les données liées au goût, qui sont démultiplexées dans le moyen de démultiplexage, sur la base d'un descripteur prédéterminé de données liées au goût ; et un moment de début et une durée de l'opération de diffusion sont synchronisés avec une image en mouvement et un son transmis depuis le dispositif vidéo et le dispositif audio, respectivement.

15. Procédé destiné à fournir des données multimédia de sensations réelles dans un système fournissant des données multimédia de sensations réelles, comprenant les étapes consistant à :
a) générer des données vidéo/audio en recevant des données multimédia depuis un dispositif externe ;
b) décrire une vibration, une odeur et un goût exprimés dans les données multimédia transmises depuis le dispositif externe afin de générer des données liées au toucher, des données liées à l'odorat et des données liées au goût sur la base de descripteurs prédéfinis de données liées au toucher, à l'odorat et au goût, respectivement ;
c) former des paquets vidéo/audio à partir des données vidéo/audio ; et former et combiner séquentiellement un paquet lié au toucher, un paquet lié à l'odorat et un paquet lié au goût à partir des données liées au toucher, des données liées à l'odorat et des données liées au goût, respectivement ;
d) effectuer une synchronisation en multiplexant les paquets vidéo/audio avec le paquet lié au toucher, le paquet lié à l'odorat et le paquet lié au goût ;
e) transmettre un paquet multiplexé à une partie de réception ;
f) recevoir le paquet multiplexé et démultiplexer le paquet multiplexé reçu par le moyen de réception en données vidéo, en données audio, en données liées au toucher, en données liées à l'odorat et en données liées au goût ;
g) décoder et transmettre les données vidéo démultiplexées et les données audio démultiplexées ;
h) fournir une vibration à un utilisateur en interprétant les données démultiplexées liées au toucher ;
i) diffuser des arômes chimiques à l'utilisateur en interprétant les données démultiplexées liées à l'odorat ; et
j) un dispositif de diffusion de goût destiné à diffuser des matières formant un goût à un utilisateur en interprétant les données démultiplexées liées au goût.
